# EUROPÄISCHE PATENTSCHRIFT

(11) **EP 1 346 823 B1**
(45) Veröffentlichungstag und Bekanntmachung des Hinweises auf die Patenterteilung: **30.07.2008**
(21) Anmeldenummer: 03005082.7
(22) Anmeldetag: 07.03.2003
(51) Int. Cl.: B32B 17/10, C03C 17/22, E04D 3/06, E04F 10/00, G09F 13/20, F21V 21/00, A47F 3/00, E06B 3/66

(54) **Transparentes Element, insbesondere Verbundglaselement**
Transparent element, in particular laminated glazing
Elément transparent, notamment vitrage feuilleté

(30) Priorität: 17.03.2002 DE 20204263 U
(43) Veröffentlichungstag der Anmeldung: 24.09.2003
(73) Patentinhaber: Döppner Bauelemente GmbH & Co. KG, 36137 Grossenlüder (DE)
(72) Erfinder: Döppner, Christoph, 36124 Eichenzell (DE)
(74) Vertreter: Patentanwälte Ruff, Wilhelm, Beier, Dauster & Partner

(56) Entgegenhaltungen:
- EP-A- 0 274 974
- EP-A- 0 593 940
- EP-A- 0 900 971
- EP-A- 1 154 199
- DE-A- 4 303 055
- DE-A- 4 415 457
- DE-U- 8 529 956
- DE-U- 8 710 619
- DE-U- 9 215 662
- GB-A- 2 316 216
- US-A- 4 100 398
- US-A- 5 105 303
- US-A- 5 533 289
- "Leuchtende Bilder in Glasscheiben" HTTP:, [Online] 25. Oktober 2002 (2002-10-25), XP002241074 Gefunden im Internet: <URL:www.schott.com/architecture/english/n ews/press.html> [gefunden am 2003-05-13]
- "LightPoints(TM)" HTTP:, [Online] XP002242278 Gefunden im Internet: <URL:www.schott.com/special flat glass/german/products design solutions/light points.html> [gefunden am 2003-05-13]

## Beschreibung

Die Erfindung betrifft ein transparentes Element, das insbesondere als Verbundglaselement ausgebildet ist. Das transparente Element besitzt wenigstens eine transparente Scheibe.

Typische transparente Elemente sind beispielsweise Fenster, die in der Regel an jedem Gebäude vorhanden sind. Darüber hinaus gibt es eine Vielzahl weiterer Anwendungsbereiche für transparente Elemente, beispielsweise großflächige Glasfronten an Gebäuden, Schaufenster, Gebäudedachelemente usw. Insbesondere die neuere Architektur setzt verstärkt auf transparente Elemente, die Gebäude lebendiger erscheinen lassen.

Jedoch ist es bei transparenten Elementen schwierig, zusätzliche, insbesondere gebäudeinfrastrukturelle Elemente, beispielsweise Beleuchtungseinrichtungen o. dgl anzubringen.

Aus der EP 900 971 A1 ist eine Beleuchtungsvorrichtung bekannt geworden, bei der Leuchtdioden auf einer Außenfläche einer Glasplatte vorgesehen sind, auf der sie auf Leiterbahnen aufgelötet sind, die als elektrisch leitende dünne und unsichtbare bzw. nahezu unsichtbare Schicht auf der Glasplatte aufgebracht sind.

Aus der DE 43 03 055 A1 ist eine photovoltaische Zelle bekannt geworden, die eine Glasscheibe enthält, die mit einer lichtdurchlässigen stromleitenden Beschichtung versehen ist. Die Beschichtung der photovoltaischen Zelle wird mit Leiterbahnen verbunden, die in Nuten der Glasscheibe eingelegt sind und aus einer Silberlegierung bestehen.

Aufgabe der Erfindung ist es daher, ein transparentes Element zu schaffen, das gegenüber dem Stand der Technik zusätzliche Anwendungsmöglichkeiten bietet.

Diese Aufgabe wird durch ein transparentes Element mit den Merkmalen des Anspruchs 1 gelöst. Weiterbildungen der Erfindung sind in den Unteransprüchen dargestellt.

Das erfindungsgemäße transparente Element hat wenigstens eine Aufnahme für wenigstens einen Medienverbraucher in Form eines Leuchtmittels. Die Stromzufuhr zur Versorgung des Leuchtmittels ist in das transparente Element integriert.

Dadurch ist es also möglich, beispielsweise für Gebäudedachelemente mit transparenten Elementen ein breites Spektrum von Anwendungsmöglichkeiten zu öffnen. Transparente Elemente besitzen in aller Regel ein oder zwei Funktionen, nämlich zum einen infolge ihrer Lichtdurchlässigkeit eine Art passive Beleuchtungsfunktion und zum anderen infolge ihrer Tragfähigkeit eine Art Gebäudestützfunktion.

Das transparente Element ist vorzugsweise aus Glas. Es ist aber auch der Einsatz eines transparenten Kunststoffs, beispielsweise von Acrylglas möglich. Die wenigstens eine Scheibe des transparenten Elements ist vorzugsweise eben bzw. plan. Es sind jedoch auch Scheiben einsetzbar, die gekrümmte Bereiche aufweisen. Die Stromzufuhr für das Leuchtmittel ist in das transparente Element integriert. Die Stromzufuhr ist in das Scheibenmaterial integriert, beispielsweise darin eingebettet.

Es kann beispielsweise eine Beleuchtungseinrichtung mit einem oder mehreren Leuchtmitteln, beispielsweise Lampen, vorgesehen sein. Das transparente Element besitzt dadurch eine Art aktive Beleuchtungsfunktion. Zusätzlich sind auch akustische Einrichtungen einsetzbar, beispielsweise Lautsprecher. Das transparente Element besitzt dann auch eine Beschallungsfunktion. Das transparente Element kann beispielsweise ein Schaufenster sein, in das eine Beleuchtungseinrichtung mit mehreren Leuchten bzw. Lampen integriert ist. Dadurch ist eine Anstrahlung der Schaufensterauslage von außen, also vom Schaufenster her, möglich. Dies hat den Vorteil, dass der Betrachter nicht geblendet wird. Außerdem ist bei dieser Art von Anstrahlung das Platzangebot für die auszustellenden Waren größer, da die Beleuchtungseinrichtung nicht, wie bei herkömmlichen Schaufensterauslagen, direkt in der Auslagefläche befestigt ist, sondern im Schaufenster selber. Ferner ist es denkbar, dass das transparente Element zumindest ein Teil einer gläsernen Ladenpassage ist, beispielsweise eines Glasdachs, an dem auch eine oder mehrere Lautsprecher angebracht sind. Damit ist eine Beschallung von oben möglich.

Die Stromzufuhr erfolgt unsichtbar. Dabei ist das transparente Element mit einer transparenten, elektrisch leitenden und leistungsübertragenden Schicht beschichtet. Das transparente Element ist also frei von irgendwelchen sichtbaren Zuführleitungen, die sein Erscheinungsbild beeinträchtigen könnten.

Die Schicht kann in Form von relativ schmalen, beispielsweise wenige Millimeter breiten, Leiterbahnen aufgetragen sein. Alternativ ist eine vollflächige Beschichtung der Scheibe möglich. Bevorzugt ist die Schicht eine transparente Folie auf Metallbasis bzw. eine metallisierende Folie. Die Leiterbahnen können dabei durch Folienstreifen gebildet werden, die beispielsweise zur Stromversorgung von LED's dienen können.

Es sind wenigstens zwei miteinander verbindbare transparente Scheiben vorgesehen. Die Stromzufuhr befindet sich dabei zumindest teilweise zwischen den Scheiben. Das transparente Element kann beispielsweise ein Verbundglaselement sein, bei dem wenigstens zwei Scheiben mittels einer Gießharzschicht miteinander verklebt sind. Die Medienzufuhr, beispielsweise in Form eines Kabels, kann dann in die Gießharzschicht eingebettet sein. Auch hier ist der Einsatz einer oder mehrerer transparenter, elektrisch leitender Schichten denkbar. Alternativ kann ein Verbundsicherheitsglaselement vorgesehen sein, bei dem wenigstens zwei Scheiben mittels einer Spezialfolie, einer sogenannten VSG-Folie, miteinander verbunden sind. Die Folie ist vorzugsweise aus Kunststoff, beispielsweise aus Polyvinylbutral (PVB).

Bei einer Weiterbildung der Erfindung ist das wenigstens eine Leuchtmittel zwischen den Scheiben angeordnet, beispielsweise eingebettet in die Gießharzschicht oder in eine isolierende Kunststoffschicht. Es können mindestens drei transparente Scheiben vorgesehen sein, von denen zwei Außenscheiben sind und mindestens eine eine Mittelscheibe ist. Das Leuchtmittel kann dabei in die Mittelscheibe integriert sein. Beispielsweise kann eine der Außenscheiben eine Isolierglasscheibe sein, die ihrerseits aus zwei Scheibenteilen besteht, die durch eine wärmedämmende Gasschicht voneinander getrennt sind.

Es ist möglich, dass bei mehreren Scheiben die einzelnen Scheiben durch ein Klemmsystem miteinander lösbar verbunden sind. Vorteilhaft ist es, eine Gummidichtung vorzusehen, mit der der Spalt zwischen den Scheiben abgedichtet werden kann. Es ist ein Austausch des Leuchtmittels möglich, falls sich dieser zwischen den Scheiben befindet oder in eine Mittelscheibe integriert ist. Auch ist dadurch die Stromzufuhr für Reparaturen zugänglich.

Die Scheibe kann wenigstens einen Ausschnitt, der als Aufnahme für das Leuchtmittel ausgebildet ist, aufweisen. Der Ausschnitt kann beispielsweise eine Bohrung oder eine Ausfräsung sein, in die beispielsweise im Falle einer Beleuchtungseinrichtung eine Fassung eingesetzt wird, die ihrerseits das Leuchtmittel aufnimmt. Die Befestigung des Leuchtmittels, beispielsweise dessen Fassung, kann mittels eines Klebers erfolgen. Es kann ein Zweikomponentenkleber und/oder ein UV-aushärtender Kleber eingesetzt werden, bzw. ein Zweikomponentenkleber mit UV-aushärtender Komponente. Der Kleber kann ebenfalls transparent sein. Darüber hinaus ist es natürlich möglich, auch die Fassung der Beleuchtungseinrichtung transparent auszubilden. Bei mehreren Scheiben, beispielsweise einem Verbundglaselement, besitzt vorzugsweise mindestens eine Scheibe den wenigstens einen Ausschnitt, während mindestens eine weitere Scheibe ausschnittsfrei ist und damit als Berührungsschutz für das Leuchtmittel dienen kann.

Ein Gebäudedachelement kann zumindest teilweise aus einem transparenten Material bestehen und mindestens ein transparentes Element bilden oder mindestens ein scheibenförmiges transparentes Element aufweisen. Es kann eine Beleuchtungseinrichtung in die transparenten Elemente integriert sein. Die Stromzufuhr zu der Beleuchtungseinrichtung kann unsichtbar durch das mindestens eine transparente Element erfolgen.

Das Dachelement aus transparentem Material oder das mindestens eine transparente Element des Dachelementes kann dazu verwendet werden, unsichtbar Strom einer Beleuchtungseinrichtung zuzuführen.

Hierzu kann das transparente Element mit einer transparenten, elektrisch leitenden und leistungsübertragenden Schicht beschichtet sein, die mindestens zwei Leiterbahnen bildet, so dass mehrere Leuchtmittel der Beleuchtungseinrichtung über die transparenten Leiterbahnen der elektrisch leistungsübertragenden Schicht mit Strom versorgbar sind.

Das transparente Element bzw. das Dachelement kann aus einem transparenten Kunststoff oder aus Glas bestehen.

Am Rand des transparenten Elements sind elektrische Anschlüsse für die Stromversorgung der Leuchtmittel über die transparenten Leiterbahnen angeordnet, die beispielsweise an eine in die Halterung des Dachelementes integrierte Stromversorgungseinrichtung angeschlossen sind.

Die Leuchtmittel können beispielsweise aus LED-Dioden bestehen, wobei die LED-Dioden vorzugsweise in das transparente Element integriert sind. Die LED-Dioden können eine Punktmatrix bilden, so dass eine Laufschriftanzeige gebildet werden kann.

Besonders vorteilhaft ist, dass das transparente Dachelement bzw. das transparente Element aus zwei mit Abstand parallelen transparenten Scheiben gebildet sein kann, und dass die Leuchtmittel zwischen den Scheiben angeordnet werden können.

Jede der Scheiben kann mindestens eine transparente Leiterbahn tragen, so dass es möglich ist, dass jede der Scheiben vollflächig eine Leiterbahn aufweist. Auf diese Weise ist es möglich, hohe Ströme von über 10 A zu übertragen und somit auch eine Beleuchtungseinrichtung mit Niedervoltspannung zu betreiben.

Bei einer Weiterbildung der Erfindung ist vorgesehen, dass das transparente Element aus einer Isolierglasscheibe besteht.

Die Glasscheiben können ihrerseits wiederum aus Verbundglasscheiben bestehen, die zwischen sich eine isolierende Kunststoffschicht aufweisen.

Das Gebäudedachelement kann wenigstens einen Teil eines Vordachs bilden das sich beispielsweise am Eingangsbereich von Gebäuden befindet. Es ist möglich mehrere verschiedenartige, insbesondere elektrische Leuchtmittel, in das Gebäudedachelement des Vordachs zu integrieren. Beispielsweise kann es sich um eine Beleuchtungseinrichtung mit wenigstens einer Leuchte, beispielsweise einem Halogenstrahler, handeln. Zusätzlich kann eine Bewegungseinrichtung mit wenigstens einem Bewegungssensor vorgesehen sein. Auch eine Überwachungseinrichtung mit wenigstens einer Überwachungskamera ist alternativ oder zusätzlich einsetzbar. Alternativ oder zusätzlich kann eine Leuchtanzeigeeinrichtung vorgesehen sein, bei der es sich insbesondere um eine Laufschriftanzeige handelt. Die Laufschrift kann durch LED-Dioden gebildet werden, die insbesondere in Form einer Punktmatrix angeordnet sind. Alternativ ist es möglich, eine leuchtende Hausnummer durch Anordnung der LED-Dioden zu bilden. Es ist auch möglich eine herkömmliche, nichtleuchtende Hausnummer, beispielsweise eine Hausnummerntafel, zu integrieren und durch ebenfalls im Vordach integrierte Strahler anzustrahlen. Es ist möglich die Stromzufuhr, die zu der im Gebäudeelement des Vordachs integrierten Beleuchtungseinrichtung führt, unsichtbar auszuführen, so dass eine Art "Sternenhimmel" gebildet wird, wobei die einzelnen Leuchten für den Beobachter quasi abgekoppelt von ihrer Stromversorgung in der Luft zu schweben scheinen und damit die "Sterne" darstellen. Eine weitere Möglichkeit ist, zusätzlich eine Beschallungseinrichtung mit wenigstens einem Lautsprecher vorzusehen.

Das Gebäudedachelement kann in einem Wintergarten zur Bildung der Dachflächen verwendet werden.

Eine weitere Verwendung des Gebäudedachelementes ist beispielsweise bei einem Fußgängerübergang möglich, wie er beispielsweise als Übergang zwischen zwei Gebäuden oder beispielsweise bei Messebauten bekannt ist.

Die vorstehenden und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können. Die Unterteilung der Anmeldung in einzelne Abschnitte sowie Zwischenüberschriften beschränkt die unter diesen gemachten Aussagen nicht in ihrer Allgemeingültigkeit.

### Figurenbeschreibung

Mehrere Ausführungsbeispiele der Erfindung sind in den Zeichnungen dargestellt und werden im folgenden näher erläutert. In den Zeichnungen zeigen:
- Fig. 1: eine schematische Darstellung eines Längsschnitts durch ein transparentes Element eines ersten Ausführungsbeispiels eines Gebäudedachelements,
- Fig. 2: eine schematische Darstellung eines Längsschnitts durch ein transparentes Element eines zweiten Ausführungsbeispiels des Gebäudedachelements,
- Fig. 3: eine schematische Darstellung eines Längsschnitts durch ein transparentes Element eines dritten Ausführungsbeispiels des Gebäudedachelements,
- Fig. 4: eine schematische Darstellung eines sechsten Ausführungsbeispiels, wobei ein Vordach eines Hauseingangs gezeigt ist,
- Fig. 5: eine zweite Ausführungsform des Vordachs gemäß Fig. 4,
- Fig. 6: eine dritte Ausführungsform des Vordachs,
- Fig. 7: die Dachkonstruktion eines Wintergartens, und
- Fig. 8: ein Fußgängerüberweg mit integrierten beleuchteten Dachelementen.

Das transparente Element 6, 8 wird im folgenden beispielhaft anhand eines Glaselements erläutert. Alternativ kann das transparente Element 6, 8 auch aus transparentem Kunststoff bestehen, beispielsweise aus Acrylglas. Als Stromverbraucher ist eine Beleuchtungseinrichtung mit einem Leuchtmittel 14 gezeigt.

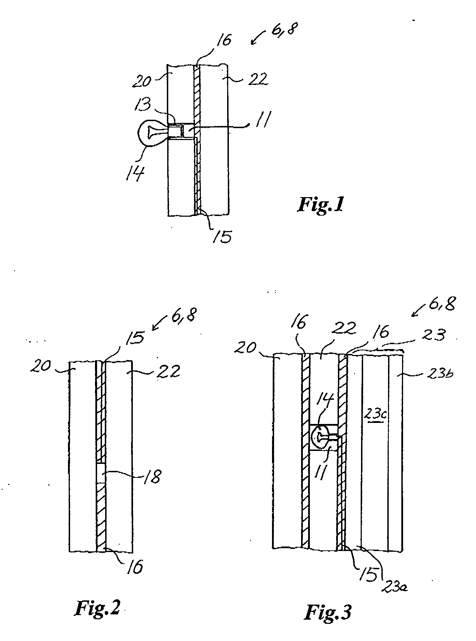

Fig. 1 zeigt ein transparentes Element 6, 8 eines ersten Ausführungsbeispiels des Gebäudedachelements. Das transparente Element 6, 8 besteht dabei aus Floatglas bzw. Spiegelglas. Die Scheibendicke liegt zwischen 1,5 mm und 19 mm, in Ausnahmefällen bis zu 24 mm. Eine der transparenten Scheiben 20 besitzt eine Bohrung 11, die als Aufnahme für das Leuchtmittel 14 dient. In Fig. 1 ist beispielhaft eine durchgehende Bohrung 11 gezeigt. Es ist jedoch auch möglich, eine Sacklochbohrung anzubringen, an die eine weitere Bohrung mit kleinerem Durchmesser anschließt, die ihrerseits zur Aufnahme der Stromzufuhr 15 dient. In die Bohrung 11 ist eine Fassung 13 eingeklebt, in die das Leuchtmittel 14 eingeschraubt werden kann. Zur Verklebung wird ein Kleber, beispielsweise ein UV-aushärtender Kleber, verwendet. Die Fassung 13 ist mit einer Stromzufuhr 15 verbunden. Die Stromzufuhr 15 verläuft vorzugsweise an der dem Leuchtmittel 14 gegenüberliegenden Seite der transparenten Scheibe 20 bis zur Höhe der Bohrung 11 und dann durch die Bohrung 11 hindurch bis zur Fassung 13. Sie kann ebenfalls mit einer Klebeverbindung mit der Außenseite der transparenten Scheibe 20 verbunden sein.

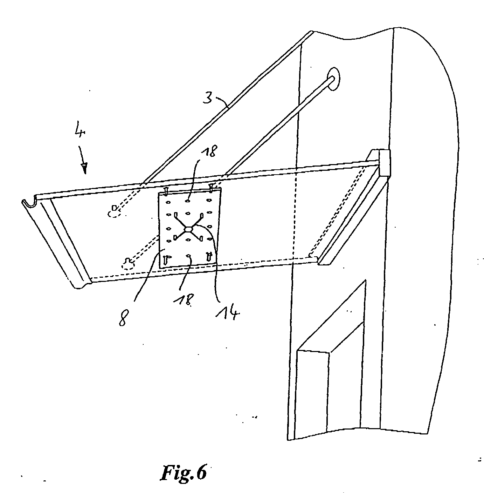

Es wird eine transparente, elektrisch leitende und leistungsübertragende Schicht verwendet. Die Schicht kann eine Folie auf Metallbasis sein, die in Form von Leiterbahnen 10, 12 (Fig. 6) bildenden Folienstreifen an der Außenseite der transparenten Scheibe 20 aufgeklebt werden kann. Gegebenenfalls kann über die elektrisch leitende Schicht noch eine isolierende Deckschicht, beispielsweise ebenfalls eine Folie, aufgetragen werden. Das Aufbringen einer transparenten Schicht bietet den Vorteil, dass die Stromzufuhr nicht sichtbar ist und somit den ästhetischen Gesamteindruck des transparenten Elements 6, 8 nicht stört.

Bei Fig. 1 handelt es sich um ein Verbundglaselement, das aus zwei transparenten Scheiben 20, 22 besteht. Die beiden transparenten Scheiben 20, 22 sind über eine Verbindungsschicht 16 miteinander verklebt. Bei der Verbindungsschicht 16 kann es sich um eine Schicht aus Gießharz handeln oder es können im Falle eines Verbundsicherheitsglases eine oder mehrere elastische, hochreißfeste Kunststoff-Folien, sogenannte VSG-Folien, eingesetzt werden. Als Kunststoff kann beispielsweise Polyvinylbutral (PVB) verwendet werden. Die Befestigung des Leuchtmittels 14 mitsamt der Fassung 13 kann in ähnlicher oder identischer Weise zu dem in Fig. 1 gezeigten Ausführungsbeispiel erfolgen. Die Stromzuführung 15 ist jedoch bei diesem Ausführungsbeispiel in die Verbindungsschicht 16 eingebettet. Auch hier ist es möglich, eine transparente Schicht anzubringen, die isolierend von der Verbindungsschicht 16 abgedeckt wird.

Auch Fig. 2 zeigt ein Verbundglaselement, das aus zwei transparenten Scheiben 20, 22 besteht. Im Unterschied zu dem in Fig. 1 gezeigten Ausführungsbeispiel befindet sich das Leuchtmittel, das hier beispielhaft anhand einer LED-Diode 18 dargestellt ist, eingebettet in der Verbindungsschicht 16 zwischen den beiden transparenten Scheiben 20, 22. Die Stromzufuhr ist in die Verbindungsschicht 16 eingebettet oder durch eine oder mehrere transparente, elektrisch leitende Schichten gebildet.

Auch bei Fig. 3 sind zwei transparente Scheiben 20, 22 vorgesehen, die über eine Verbindungsschicht 16 miteinander verklebt sind. Eine der beiden transparenten Scheiben 20, 22 ist über eine weitere Verbindungsschicht 16 mit einer Isolierglasscheibe 23 verklebt. Die Isolierglasscheibe 23 ihrerseits besitzt zwei Isolierglasscheibenteile 23a, 23b, die durch einen gasgefüllten Zwischenraum 23c voneinander getrennt sind. Das Gas wirkt dabei als Wärmedämmung. Als Gas kann Luft oder ein

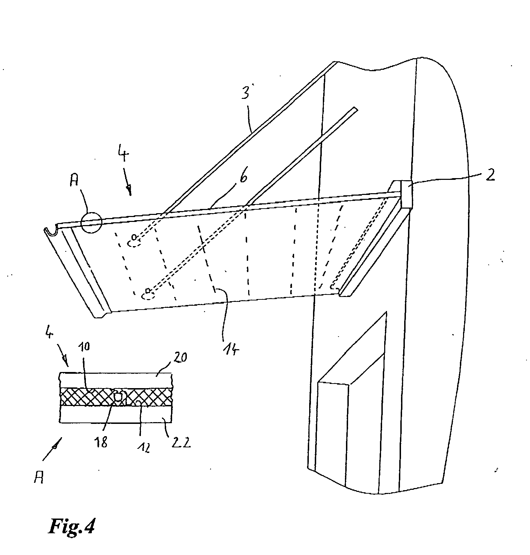

Edelgas, beispielsweise Argon, Krypton oder Xenon eingesetzt werden. Auch Gasgemische sind möglich. Der Abstand der beiden Isolierglasscheibenteile 23a und 23b beträgt 5mm bis 25mm. Das transparente Element 6, 8 wird also von zwei Außenscheiben 20, 23 und einer Mittelscheibe 22 gebildet. Die Mittelscheibe 22 besitzt eine Bohrung 11 zur Aufnahme eines Leuchtmittels. Das Leuchtmittel 14 ist also vollständig in die Mittelscheibe 22 integriert. Die Stromzufuhr für das Leuchtmittel 14 kann beispielsweise mittels eines Kabels 15, das in einer der beiden Verbindungsschichten 16 eingebettet ist, erfolgen. Darüber hinaus kann auch hier alternativ eine transparente elektrisch leitende Schicht angebracht werden. Alternativ kann anstelle der in den Fig. 3 und 4 gezeigten Verbindungsschicht 16, die zur festen, in der Regel unlösbaren Verbindung von wenigstens zwei Scheiben dient, ein Klemmsystem eingesetzt werden, um die transparenten Scheiben lösbar aneinander zu befestigen. Dadurch ist das Leuchtmittel 14 zugänglich und kann im Schadensfall ausgewechselt werden. Auch wird dadurch eine Reparatur an der Stromzufuhr möglich, beispielsweise falls ein Wackelkontakt auftritt.

Fig. 4 zeigt eine Hausfassade, an der ein Vordach als Gebäudedachelement mit Hilfe einer Halterung 2 befestigt ist. Die Halterung 2 kann von Halterungsstangen 3 oder Seilen unterstützt werden, um höhere Dachlasten zu ermöglichen. Das in Fig. 4 gezeigte Dachelement 4 besteht aus einem transparenten Material, z.B. einer Acrylglasscheibe oder einer Glasscheibe.

An der der Halterung 2 zugewandten Seite des Dachelementes 4 treten an den Stirnseiten des Dachelementes 4 zwei Leitungsanschlüsse heraus, die mit mindestens zwei in das Dachelement 4 integrierten Leiterbahnen 10, 12 verbunden sind, die auf dem Dachelement 4 oder dem transparenten Element 6 des Dachelementes 4 durch Beschichtung aufgebracht sind. Die transparenten Leiterbahnen ermöglichen es, Stromstärken von mehr als 10A bis zu ca. 20A an eine Beleuchtungseinrichtung zu übertragen. Die Beschichtung von Glas mit einer transparenten elektrisch leitenden Schicht ist grundsätzlich aus der WO 99/03111 bekannt. Die Strombahnen 10, 12 können auf dem transparenten Element 6 nach einem bestimmten Muster aufgebracht sein, um die Stromversorgung der Leuchtmittel 14 der Beleuchtungseinrichtung zu ermöglichen.

Bevorzugt besteht das Dachelement 4 bzw. das transparente Element 6 aus einem Verbundglas aus zwei Glasscheiben und einer dazwischen angeordneten isolierenden Kunststoffschicht, wobei dann die Leiterbahnen 10, 12 vollflächig auf jeweils eine der Glasscheiben aufgetragen werden kann.

Die Leuchtmittel 14 sind dann entweder auf einer der Scheiben, z.B. bei dem Dachelement 4, auf deren Unterseite oder vor Witterungseinflüssen geschützt, zwischen den beiden Glasscheiben angeordnet. Die Leuchtmittel 14 könnten an einer beliebigen Stelle des Dachelementes angeordnet sein und mit beiden Leiterbahnen 10, 12 kontaktieren, um mit Strom versorgt zu werden. Stromzuführende Elemente sind dann auf dem Dachelement 4 an keiner Stelle sichtbar.

Das Detail A von Fig. 4 entspricht dem in der Fig. 2 dargestellten Ausführungsbeispiel und zeigt einen Schnitt durch ein Dachelement 4 bzw. durch ein transparentes Element 6, 8, das aus einer Verbundglasscheibe gebildet ist. Alternativ kann als Dachelement 4 bzw. als transparentes Element 6 auch eine Isolierglasscheibe 23 verwendet werden, deren Glasscheiben jeweils aus Verbundglasscheiben bestehen können.

Im Fall einer Isolierglasscheibe 23 können die Leuchtmittel 14 auch in dem Hohlraum zwischen den Scheiben der Isolierglasscheibe 23 angeordnet sein.

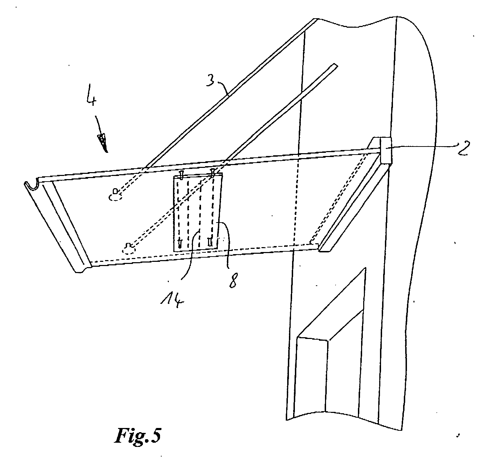

Fig. 5 zeigt ein alternatives Ausführungsbeispiel gemäß Fig. 4, bei dem die Leuchtmittel 14 in einem scheibenförmigen transparenten Element 8 angeordnet sind, das an dem Dachelement 4 befestigt ist.

In diesem Fall kann das Dachelement 4 selbst auch aus nicht transparentem Material bestehen und nur das scheibenförmige Element 8 transparent sein. Die Stromversorgung erfolgt dann unsichtbar über die Befestigungselemente des transparenten Elementes 8 und die transparenten Leiterbahnen 10, 12 sind dann in dem transparenten Element 8 und können auch zusätzlich in dem Dachelement 4 vorgesehen sein.

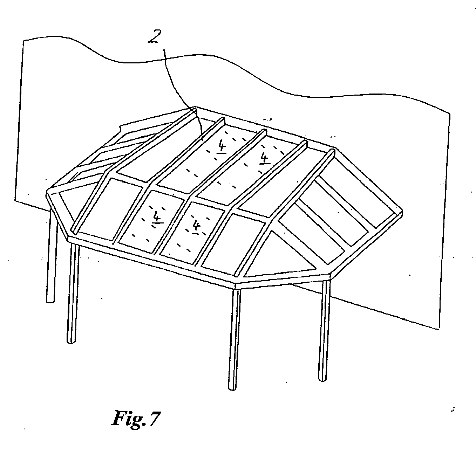

Die bevorzugte Ausführungsform des Ausführungsbeispiels der Fig. 7 besteht aus einem transparenten Dachelement 4 mit einem scheibenförmigen transparenten Element 8.

Fig. 6 zeigt ein weiteres Ausführungsbeispiel gemäß Fig. 4, bei dem in dem scheibenförmigen transparenten Element 8 mehrere LED-Dioden 18 vorgesehen sind, die in dem vorzugsweise aus einer Glasscheibe bestehenden Element 8 integriert sind. Zusätzliche Leuchtmittel 14 können auf der Unterseite des transparenten Elementes 8 befestigt sein und unsichtbar mit Strom versorgt sein.

Fig. 7 zeigt die Integration von Dachelementen 4 in einen Wintergarten, wodurch es möglich ist, in einem Wintergarten eine beleuchtete Dachfläche zu schaffen ohne störende und sichtbare Stromzuführeinrichtungen und ohne separate Beleuchtungseinrichtungen auf den Trägern des Wintergartens vorzusehen.

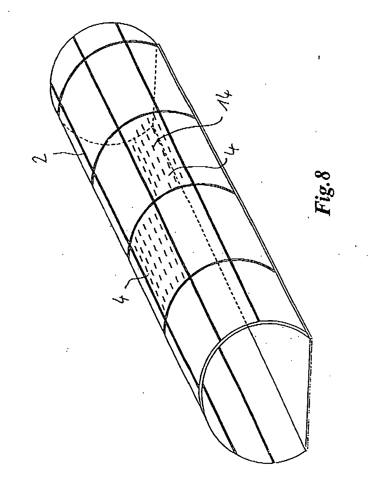

Fig. 8 zeigt eine weitere Anwendung bei Fußgängerübergängen, wie sie auf Messegeländen auch zur Verbindung zweiter Gebäude bekannt sind.

Bei allen Ausführungsbeispielen, aber insbesondere bei Dachelementen 4 in Fußgängerübergängen können die Beleuchtungseinrichtungen auf den Dachelementen 4 auch derart angeordnet sein, dass sie mit Hilfe der LED-Dioden 18 eine Punktmatrix bilden, die Informationen anzeigt. Beispielsweise ist es möglich, Werbung oder andere Informationen computergesteuert per Laufschriftanzeige über die LED-Dioden 18 per Leuchtmittel 14 auf den Dachelementflächen darzustellen.

## Patentansprüche

1. Transparentes Element, insbesondere Verbundglaselement, das wenigstens zwei transparente Scheiben (20, 22) aufweist, wobei das transparente Element (6, 8) wenigstens eine Aufnahme für wenigstens ein Leuchtmittel (14) aufweist und die Stromzuleitung (15) zu dem Leuchtmittel (14) in das transparente Element (6, 8) integriert ist, indem sie in Form wenigstens einer transparenten, elektrisch leitenden und leistungsübertragende Leiterbahnen (10, 12) bildenden Schicht zwischen den Scheiben (20, 22) verläuft.

2. Transparentes Element nach Anspruch 1, **dadurch gekennzeichnet, dass** die Stromzuleitung (15) mittels einer Beschichtung der Scheibe (20, 22, 23) mit der transparenten, elektrisch leitenden und leistungsübertragenden Schicht erfolgt.

3. Transparentes Element nach Anspruch 1 oder 2, **dadurch gekennzeichnet, dass** die Schicht in Form von relativ schmalen Leiterbahnen (10, 12) aufgetragen ist.

4. Transparentes Element nach einem der vorherigen Ansprüche, **dadurch gekennzeichnet, dass** die Schicht eine transparente Folie auf Metallbasis ist, wobei vorzugsweise die Leiterbahnen (10, 12) durch Folienstreifen gebildet sind.

5. Transparentes Element nach einem der vorhergehenden Ansprüche, **dadurch gekennzeichnet, dass** wenigstens ein Leuchtmittel (14) zwischen den Scheiben (20, 22, 23) angeordnet ist.

6. Transparentes Element nach einem der vorhergehenden Ansprüche, **dadurch gekennzeichnet, dass** mindestens drei Scheiben vorgesehen sind, von denen zwei Außenscheiben (20, 23) sind und mindestens eine eine Mittelscheibe (22) ist, wobei das Leuchtmittel (14) in die Mittelscheibe (22) integriert ist.

7. Transparentes Element nach einem der vorherigen Ansprüche, **dadurch gekennzeichnet, dass** die Scheiben (20, 22, 23) durch ein Klemmsystem miteinander lösbar verbunden sind.

8. Transparentes Element nach einem der vorhergehenden Ansprüche, **dadurch gekennzeichnet, dass** die Scheibe (20, 22, 23) wenigstens einen Ausschnitt, insbesondere eine Bohrung (11), aufweist, der als Aufnahme für das Leuchtmittel (14) ausgebildet ist, wobei vorzugsweise bei mehreren Scheiben (20, 22, 23) mindestens eine Scheibe den Ausschnitt aufweist und mindestens eine weitere ausschnittsfreie Scheibe (20, 22, 23) als Berührungsschutz dient.

9. Transparentes Element nach einem der vorhergehenden Ansprüche, **dadurch gekennzeichnet, dass** die transparenten Scheiben (20, 22) über eine Verbindungsschicht (16) miteinander verbunden sind, die als Kunststofffolie ausgebildet ist.

10. Transparentes Element nach einem der vorhergehenden Ansprüche, **dadurch gekennzeichnet, dass** die transparenten Scheiben (20, 22) mittels einer Verbindungsschicht (16) miteinander verbunden sind, die als Gießharzschicht ausgebildet ist.

11. Transparentes Element nach Anspruch 9 oder 10, **dadurch gekennzeichnet, dass** das Leuchtmittel (14) in die die Scheiben (20, 22) verbindende Kunststoff-Verbindungsschicht (16) eingebettet ist.

12. Transparentes Element nach einem der Ansprüche 1 bis 8, **dadurch gekennzeichnet, dass** das Leuchtmittel zugänglich und auswechselbar ist.

## Claims

1. Transparent element, in particular a composite glass element, having at least two transparent panes (20, 22), where said transparent element (6, 8) has at least one receptacle for at least one illuminant (14) and the current supply (15) to the illuminant (14) is integrated into the transparent element (6, 8) in that it passes between the panes (20, 22) in the form of at least one transparent, electrically conducting and power-transmitting layer forming conducting tracks (10, 12).

2. Transparent element according to claim 1, **characterized in that** the current supply (15) is by means of a coating of the pane (20, 22, 23) with the transparent, electrically conducting and power-transmitting layer.

3. Transparent element according to claim 1 or 2, **characterized in that** the layer is applied in the form of relatively narrow conducting tracks (10, 12).

4. Transparent element according to any of the preceding claims, **characterized in that** the layer is a transparent, metal-based foil, where the conducting tracks (10, 12) are preferably formed by foil strips.

5. Transparent element according to any of the preceding claims, **characterized in that** the at least one illuminant (14) is arranged between the panes (20, 22, 23).

6. Transparent element according to any of the preceding claims, **characterized in that** at least three panes are provided, of which two are outer panes (20, 23) and at least one is a middle pane (22), where the illuminant (14) is integrated into the middle pane (22).

7. Transparent element according to any of the preceding claims, **characterized in that** the panes (20, 22, 23) are detachably interconnected by a clamping system.

8. Transparent element according to any of the preceding claims, **characterized in that** the pane (20, 22, 23) has at lest one cutout, in particular a hole (11), designed as a receptacle for the illuminant (14), where preferably in the case of several panes (20, 22, 23), at least one pane has the cutout and at least one further cutout-free pane (20, 22, 23) serves as a contact protection.

9. Transparent element according to any of the preceding claims, **characterized in that** the transparent panes (20, 22) are interconnected via a connection layer (16) formed as a plastic film.

10. Transparent element according to any of the preceding claims, **characterized in that** the transparent panes (20, 22) are interconnected via a connection layer (16) formed as a cast resin film.

11. Transparent element according to claim 9 or 10, **characterized in that** the illuminant (14) is embedded in the plastic connection layer (16) connecting the panes (20, 22).

12. Transparent element according to any of claims 1 to 8, **characterized in that** the illuminant is accessible and replaceable.

## Revendications

1. Elément transparent, notamment élément en verre feuilleté, présentant au moins deux vitres transparentes (20, 22), sachant que l'élément transparent (6, 8) comprend au moins un logement pour au moins un agent lumineux (14) et que l'arrivée de courant (15) pour l'agent lumineux (14) est intégrée dans l'élément transparent (6, 8) en s'étendant entre les deux vitres (20, 22) sous forme d'au moins une couche transparente, laquelle conduit l'électricité et transmet la puissance, formant des pistes conductrices (10, 12).

2. Elément transparent selon la revendication 1, **caractérisé en ce que** l'arrivée de courant (15) s'effectue par un revêtement de la vitre (20, 22, 23) d'au moins une couche transparente, laquelle conduit l'électricité et transmet la puissance.

3. Elément transparent selon la revendication 1 ou 2, **caractérisé en ce que** la couche est appliquée sous forme de pistes conductrices (10, 12) relativement étroites.

4. Elément transparent selon une des revendications précédentes, **caractérisé en ce que** la couche est un film transparent à base métallique, sachant que les pistes conductrices (10,12) sont formées de préférence par des bandes de film.

5. Elément transparent selon une des revendications précédentes, **caractérisé en ce que** l'au moins un agent lumineux (14) est placé entre les vitres (20, 22, 23).

6. Elément transparent selon une des revendications précédentes, **caractérisé en ce que** sont prévues au moins trois vitres dont deux vitres extérieures (20, 23) et au moins une vitre centrale (22), sachant que l'agent lumineux (14) est intégré dans la vitre centrale (22).

7. Elément transparent selon une des revendications précédentes, **caractérisé en ce que** les vitres (20, 22, 23) sont reliées entre elles par un système de serrage de telle manière qu'il est possible de les détacher.

8. Elément transparent selon une des revendications précédentes, **caractérisé en ce que** la vitre (20, 22, 23) présente au moins une entaille, en particulier un trou (11), conçue de manière à servir de logement au agent lumineux, sachant que, lorsque plusieurs vitres (20, 22, 23) sont utilisées, au moins une vitre présente de préférence le trou et au moins une autre vitre (20, 22 ,23) est entière de manière à servir de protection contre le contact.

9. Elément transparent selon une des revendications précédentes, **caractérisé en ce que** les vitres transparentes (20, 22) sont reliées entre elles par une couche liaison (16) qui est formée d'un film en matière plastique.

10. Elément transparent selon une des revendications précédentes, **caractérisé en ce que** les vitres transparentes (20, 22) sont reliées entre elles par une couche liaison (16) qui est formée d'une couche en résine de coulée.

11. Elément transparent selon la revendication 9 ou 10, **caractérisé en ce que** l'agent lumineux (14) est encastré dans la couche liaison (16) reliant les vitres (20, 22).

12. Elément transparent selon une des revendications 1 à 8, **caractérisé en ce que** l'agent lumineux est accessible et échangeable.
